# FASCICULE DE BREVET EUROPEEN

(11) **EP 0 619 633 B1**
(45) Date de publication et mention de la délivrance du brevet: **14.01.1998**
(21) Numéro de dépôt: 94400758.2
(22) Date de dépôt: 07.04.1994
(51) Int. Cl.: H02G 1/08, H02G 1/06, E02F 5/10

(54) **Procédé de pose d'un produit de grande longueur dans le sol, et dispositifs pour sa mise en oeuvre**
Verfahren zum Verlegen eines Produkts grosser Länge in das Erdreich und Vorrichtungen zu dessen Durchführung
Process for laying a product of great length in the ground and devices for its carrying out

(30) Priorité: 08.04.1993 FR 9304183
(43) Date de publication de la demande: 12.10.1994
(73) Titulaire: CABLES PIRELLI, F-94417 Saint Maurice (FR)
(72) Inventeur: Missout, Bernard, Michel, F-94200 Ivry-sur seine (FR)
(74) Mandataire: Lhuillier, René

(56) Documents cités:
- DE-A- 3 521 566
- LU-A- 81 062
- US-A- 1 904 666
- US-A- 3 390 533
- US-A- 4 896 997
- PATENT ABSTRACTS OF JAPAN vol. 6, no. 92 (P-119) (970) 29 Mai 1982 & JP-A-57 029 013 (FUJIKURA DENSEN) 16 Février 1982

## Description

L'invention est relative à un procédé de pose d'un produit de grande longueur dans le sol, tel qu'un câble ou un produit tubulaire, les applications préférées étant en premier lieu l'enfouissement de câbles de télécommunications et en second lieu l'enfouissement de câbles électriques de puissance.

On connait par le US-A-4 896 997 et le US-A-1 904 666 des dispositifs de pose dans le sol de produits de grande longueur associés à des moyens de fragmentation pour creuser un sillon, et par le LU-A-81602 un dispositif d'entraînement magnétique pour tirer un produit dans un tube.

Ces dispositifs connus ne permettent pas de résoudre les problèmes particuliers qui sont d'une part d'effectuer une pose rapide du tube et du produit tout le long du trajet du produit, d'autre part de permettre un franchissement aisé des "points singuliers" que sont par exemple les routes, les canalisations, les rivières, etc...

A cet effet, le procédé de fragmentation du sol selon un sillon tout en déposant dans ledit sillon, au fur et à mesure de la réalisation de celui-ci, une longueur d'un tube apte à loger ledit produit avec jeu, consiste selon l'invention, au fur et à mesure de la pose dudit tube dans le sillon à tirer le produit par son extrémité libre dans le même sens que celui de la pose du tube à l'intérieur de celui-ci au moyen d'un dispositif d'entraînement magnétique comprenant une culasse tubulaire apte à être traversée avec jeu par le tube et un noyau cylindrique apte à être logé avec jeu dans le tube, la culasse et le noyau comportant des moyens magnétiques agencés pour produire un champ magnétique radial entre eux et au travers dudit tube, propre à immobiliser axialement le noyau par rapport à la culasse, ladite extrémité de produit étant fixée audit noyau, la traction sur le produit s'effectuant en déplaçant ladite culasse parallèlement au sillon au fur et à mesure de l'exécution de celui-ci.

Le premier problème précité est résolu par le fait que le tube et le produit sont posés simultanément dans la même opération, plutôt qu'au moyen de deux opérations successives selon lesquelles on déposerait d'abord le tube, puis on tirerait le produit dans le tube sur une grande longueur au moyen d'un filin ou "câblette".

Le second problème précité est résolu par le fait que, lorsque l'on rencontre un point singulier, il suffit de couper le tube, de faire passer une longueur de tube et de produit sous le point singulier, puis de réunir les deux parties de tube ainsi formées, comme cela sera expliqué en détail par la suite.

L'invention concerne aussi un dispositif de pose d'un produit de grande longueur dans le sol, permettant de mettre en oeuvre le procédé précité, ainsi qu'un dispositif d'entraînement magnétique pour tirer un tel produit dans un tube.

D'autres détails et avantages de l'invention apparaîtront au cours de la description suivante d'une forme de réalisation préférée mais non limitative, en regard des dessins annexés sur lesquels :
la figure 1 est une vue en élévation d'un dispositif de pose d'un câble dans le sol pour mettre en oeuvre le procédé selon l'invention ;
la figure 2 est une vue en coupe longitudinale du dispositif d'entraînement magnétique utilisé en figure 1, selon la ligne II-II de la figure 3 ; et
la figure 3 est une vue en coupe transversale du dispositif d'entraînement magnétique selon la ligne III-III de la figure 2.

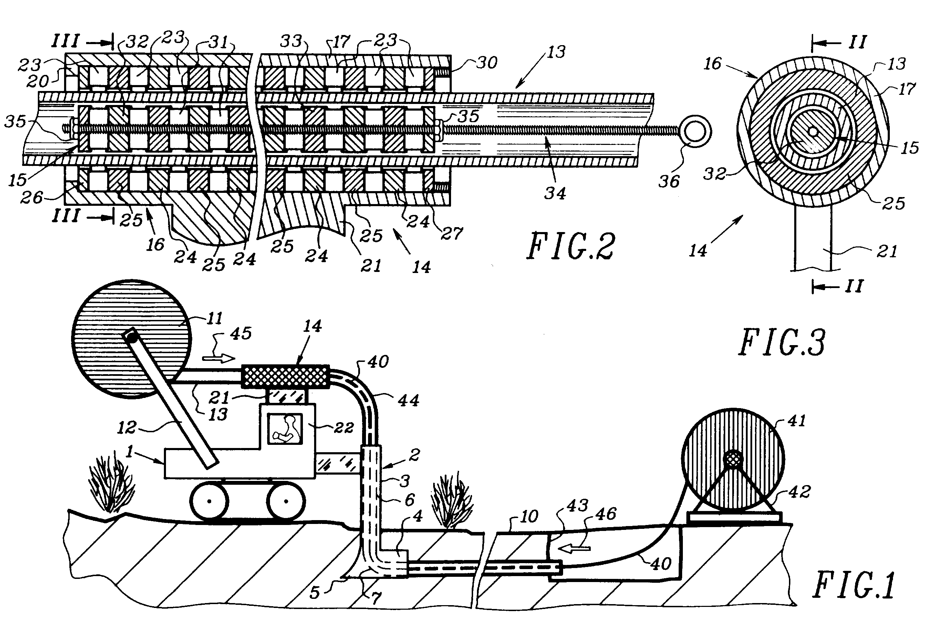

Sur la figure 1 est représentée une sous-soleuse 1 constituée d'un tracteur monté sur chenilles, à l'arrière duquel est fixé un soc vibrant 2. Le soc vibrant est en forme générale de L comprenant un montant 3 et une base transversale 4, une extrémité de la base voisine du montant portant une pointe formant soc 5. Le montant 3 et la base 4 sont traversés longitudinalement par une cavité cylindrique 6 de section circulaire s'étendant, dans une zone de liaison entre le montant 3 et la base 4, selon un coude 7. L'agencement est tel que la base 4 du soc 2 est disposée sous la surface 10 du sol.

La sous-soleuse 1 porte, dans une région avant, un touret de tube 11 supporté à rotation sur deux bras 12 et sur lequel est enroulé un tube 13. Le touret de tube 11 comporte des moyens non représentés pour freiner sa rotation. Le tube 13 est en une matière amagnétique semi-rigide présentant une souplesse suffisante pour permettre son enroulement sur le touret de tube 11, par exemple en polyéthylène haute densité. Avantageusement, le tube 13 porte intérieurement une couche lubrifiante telle qu'une couche de silicone ou une pellicule d'huile.

La sous-soleuse 1 porte encore, dans une région intermédiaire entre le touret de tube 11 et le soc 2, un entraîneur magnétique 14 comprenant un noyau central 15 et une culasse périphérique 16 recevant ce dernier. La culasse 16 comprend un cylindre 17 de section circulaire présentant un rebord intérieur 20 à une extrémité et portant un pied 21 sous la forme d'une plaque rectangulaire s'étendant sur une partie de la longueur du cylindre 17 et reliant une surface extérieure de celui-ci à la sous-soleuse 1. Le cylindre 17 est fixé de façon à s'étendre parallèlement à la direction de déplacement de la sous-soleuse 1 et à faire face à une portion de tube 13 telle que délivrée par le touret de tube 11.

A l'intérieur du cylindre 17, sont logés un certain nombre de pièces polaires 24, 25 magnétisées par des aimants permanents 23 pour constituer une succession de pôles nord 24 et de pôles sud 25. Ces aimants et pôles se présentent sous la forme de couronnes circulaires dont le diamètre extérieur correspond sensiblement au diamètre intérieur du cylindre 17. Les pôles nord 24 et sud 25 sont disposés alternativement le long du cylindre 17 et séparés les uns des autres par les aimants 23 de sorte que chaque aimant 23 soit intercalé entre un pôle nord 24 et un pôle sud 25, chaque pôle étant double en ce sens qu'il constitue une pièce polaire de même signe pour les deux aimants entre lesquels il se trouve. Aux deux extrémités du cylindre 17, se trouvent respectivement un pôle nord simple 26 et un pôle sud simple 27 d'épaisseur moitié de celle des pôles doubles 24, 25. A l'extrémité du cylindre 17 éloignée du rebord 20 est vissé un écrou annulaire 30 qui coopère avec la surface intérieure du cylindre de façon à comprimer les uns contre les autres les aimants 23 et les pôles 24 à 27.

Le noyau 15 de l'entraîneur magnétique 14 est constitué par un empilement d'aimants 31, de pôles nord 32 et de pôles sud 33 se présentant sous la forme de disques d'épaisseur identique à celle des couronnes équipant la culasse 16, disposés alternativement le long du noyau de la même façon que les couronnes, le nombre de disques étant égal à celui des couronnes. Toutefois, l'agencement des disques 31 à 33 est décalé par rapport à celui-des couronnes de façon que, lorsque le noyau 15 et la culasse 16 occupent une même position axiale, leurs aimants respectifs 31, 23 sont disposés en regard tandis que les pôles nord 32 de l'un font face aux pôles sud 25 de l'autre et vice-versa : cette position mutuelle de la culasse 16 et du noyau 15 correspond à une position de l'entraîneur magnétique dans laquelle, il existe un champ magnétique purement radial s'étendant entre les pôles de la culasse 16 et ceux du noyau 15, le noyau n'étant par conséquant soumis à aucune force de traction axiale. En revanche, lorsque le noyau est soumis à la plus grande force de traction axiale admissible, il se trouve décalé vers la droite de la figure 2 d'une distance qui est de l'ordre de grandeur de l'épaisseur des aimants 23, 31, le champ magnétique radial étant alors déformé.

Les disques 31 à 33 sont traversés centralement par une tige filetée 34 et comprimés les uns contre les autres sur celle-ci au moyen de deux écrous 35 situés de part et d'autre de l'ensemble de disques. D'un côté du noyau 15 tourné vers l'arrière de la sous-soleuse 1, la tige filetée 34 se prolonge au-delà de celui-ci sur une certaine longueur et porte, à son extrémité, un anneau 36.

Le tube 13 traverse la culasse 16 en entourant le noyau 15. Les diamètres respectifs de ces pièces sont tels qu'il subsiste seulement un léger jeu radial entre le tube 13 et la culasse 16 d'une part, et entre ce tube et le noyau d'autre part, choisi pour autoriser un déplacement relatif de ces pièces les uns par rapport aux autres.

Le matériau constituant les aimants et le nombre de ceux-ci sont choisis de façon que le noyau 15 puisse résister à une force de traction axiale de l'ordre de 200 à 300 daN. Dans cet exemple, on a utilisé des aimants "NFB" composés principalement de néodyme, de fer et de bore. Un nombre de paires de pôles nord-sud égal à une vingtaine, correspondant à une longueur d'entraîneur magnétique de 1 m environ, a permis d'obtenir une résistance de 260 daN. Les pôles 24, 25, 32, 33 de la culasse 16 et du noyau 15 sont réalisés en un matériau ferromagnétique doux. Quant au cylindre 17 de la culasse 16, il est réalisé en un matériau amagnétique.

On va maintenant décrire la pose d'un câble 40 tel qu'un câble de télécommunications ou un câble électrique de puissance, enroulé sur un touret de câble 41 comportant des moyens de support 42 permettant de le poser sur le sol 10. Il s'agit par exemple d'un câble de diamètre 14 mm, auquel est associé un tube de diamètre extérieur 50 mm. On creuse tout d'abord une fouille 43 de petites dimensions, à une profondeur correspondant à celle à laquelle le câble 40 doit être enfoui, et dans laquelle on dispose le soc vibrant 2 de la sous-soleuse 1. On fait passer l'extrémité libre du câble 40 dans la cavité 7 du soc vibrant 2, à partir de la base 4 de celui-ci, jusqu'à la faire ressortir à l'extrémité libre du montant 3 et on l'accroche à l'anneau 36 de l'entraîneur magnétique. On dispose ensuite l'extrémité libre du tube 13 entre la culasse 16 et le noyau 15 de l'entraîneur magnétique. Cette opération pourra être effectuée en pratique de diverses manières. Par exemple, des doigts de centrage escamotables pourront être prévus à l'intérieur de la culasse pour maintenir le noyau coaxial à la culasse, avant insertion du tube. En variante, la culasse pourra être conçue sous la forme de deux demi-coquilles semi-cylindriques qui seront rapportées autour du tube et assemblées l'une à l'autre, après insertion du noyau dans le tube.

L'extrémité libre du tube 13 est ensuite introduite à l'intérieur du soc vibrant 2, à partir de l'extrémité libre du montant 3 de celui-ci, en produisant une courbure 44 du tube entre l'entraîneur magnétique et le soc vibrant. Une fois que l'extrémité libre du tube 13 est ressortie quelque peu de la base 4 du soc vibrant 2, l'opération d'enfouissement du câble peut commencer.

Alors que la sous-soleuse 1 avance de façon que la pointe 5 du soc vibrant fragmente le sol, et du fait que la partie de tube 13 déjà enterrée se trouve immobilisée dans le sol, il se produit une traction sur le tube 13 qui déplace celui-ci vers l'entraîneur magnétique 14 selon la flèche 45 puis vers le soc vibrant 2 pour reposer finalement horizontalement en sous-sol. Dans le même temps, la sous-soleuse 1 effectue dans son mouvement d'avance une traction sur le câble 40 selon la flèche 46, ce qui a pour effet de disposer, pour chaque longueur unitaire de tube 13 enfouie, une longueur correspondante de câble à l'intérieur de celle-ci.

Lors du passage d'un point singulier tel qu'une route, une canalisation ou une rivière ne permettant pas à la sous-soleuse 1 de continuer son avance, on stoppe celle-ci et on relève son soc 2. Deux fouilles ayant été préalablement réalisées de part et d'autre du point singulier, on fait avancer la sous-soleuse 1 au-dessus de celui-ci de façon à délivrer une longueur supplémentaire de tube 13 et de câble 40 correspondant à la largeur selon laquelle s'étend ce point singulier. On coupe alors le tube 13, par exemple juste en aval de l'entraîneur magnétique 14 et on décroche le câble 40 de l'anneau 36.

Une conduite de passage apte à recevoir le tube 13 ayant été par ailleurs préalablement disposée sous le point singulier, on glisse dans celle-ci ladite longueur supplémentaire de tube et de câble. On raccroche ensuite le câble à l'anneau 36 de l'entraîneur magnétique 14 et l'on tire sur le tube 13 délivré par le touret de tube 11 pour obtenir une longueur de tube que l'on introduit dans le soc 2 et que l'on raccorde à ladite longueur supplémentaire de tube disposée dans la conduite de passage, au moyen d'un manchon de raccordement approprié : la sous-soleuse 1 est alors prête pour redémarrer.

On notera qu'avantageusement l'invention n'exige pas d'avoir à dérouler toute la longueur de tube et de câble disposée sur le touret de tube 11 et le touret de câble 41 respectivement, au passage du point singulier, ce qui procure un gain de temps opératoire important.

En variante à l'entraîneur magnétique 14 décrit ci-dessus, chaque couronne 23 à 27 ou disque 31 à 33 pourra être remplacé par un groupe d'éléments discrets, juxtaposés et disposés périphériquement autour de l'axe de l'entraîneur magnétique 14.

Selon une autre variante l'entraîneur magnétique pourra être du type électro-magnétique, c'est-à-dire conçu selon le principe d'un électro-aimant et comporter des enroulements de fils conducteurs, soit reliés à une source d'énergie électrique s'il s'agit d'enroulements portés par la culasse, soit non reliés à une telle source s'il s'agit d'enroulements portés par le noyau. Eventuellement, l'entraîneur magnétique pourra comporter à la fois des enroulements de fils conducteurs alimentés en électricité et des aimants permanents.

Naturellement, le tube 13 pourra avoir toute section de forme appropriée, différente de la forme circulaire susmentionnée.

Par ailleurs, si dans cet exemple les moyens de guidage du tube 13 dans le sol sont d'une pièce avec les moyens de fragmentation du sol et se présentent sous la forme du soc vibrant évidé 2, ces moyens peuvent être physiquement distincts les uns des autres : ainsi, les moyens de fragmentation du sol pourront consister en une scie à rocher disposée devant les moyens de guidage du tube, ces derniers se présentant sous la même forme générale de L que le soc vibrant 2.

## Revendications

1. Procédé de pose dans le sol d'un produit de grande longueur simultanément à la pose d'un tube de protection destiné à entourer ledit produit, selon lequel on fragmente le sol selon un sillon tout en déposant dans ledit sillon, au fur et à mesure de la réalisation de celui-ci, une longueur d'un tube (13) apte à loger ledit produit (40) avec jeu, caractérisé en ce que au fur et à mesure de la pose dudit tube (13) dans le sillon, on tire par son extrémité libre le produit dans le même sens que celui de la pose du tube et à l'intérieur de celui-ci au moyen d'un dispositif d'entraînement magnétique (14) comprenant une culasse tubulaire (16) apte à être traversée avec jeu par le tube (13) et un noyau cylindrique (15) apte à être logé avec jeu dans le tube, la culasse et le noyau comportant des moyens magnétiques (23 à 27 ; 31 à 33) agencés pour produire un champ magnétique radial entre eux et au travers dudit tube (13), propre à immobiliser axialement le noyau (15) par rapport à la culasse (16), ladite extrémité de produit étant fixée audit noyau, la traction sur le produit s'effectuant en déplaçant ladite culasse (16) parallèlement au sillon au fur et à mesure de l'exécution de celui-ci.

2. Dispositif de pose dans le sol d'un produit de grande longueur (40) disposé dans un tube (13), comportant une sous-soleuse (1) sur laquelle sont montés des moyens de fragmentation (5) agencés pour fragmenter le sol selon un sillon à une profondeur correspondant à la profondeur de pose du produit et un touret de tube (11) apte à délivrer une longueur de tube sensiblement égale à celle du produit à poser ; caractérisé en ce que sur la sous-soleuse sont montés un dispositif d'entraînement magnétique pour tirer le produit (40) à l'intérieur du tube (13), disposé entre le touret de tube (11) et les moyens de fragmentation (5) et comprenant une culasse tubulaire (16) apte à être traversée avec jeu par le tube (13) et un noyau cylindrique (15) apte à être logé avec jeu dans le tube, la culasse et le noyau comportant des moyens magnétiques (23 à 27 ; 31 à 33) agencés pour produire un champ magnétique radial entre eux et au travers dudit tube, propre à immobiliser axialement le noyau (15) par rapport à la culasse (16), la culasse étant fixée sur la sous-soleuse et le noyau comprenant des moyens pour permettre la fixation d'une extrémité du produit sur lui.

3. Dispositif de pose selon la revendication 2, dans lequel le produit (40) est enroulé sur un touret de produit (41) équipé de moyens de support (42) par lesquels celui-ci repose sur le sol en amont dudit sillon.

4. Dispositif de pose selon la revendication 2 caractérisé en ce que lesdits moyens magnétiques comprennent, sur la culasse (16) et sur le noyau (15), une pluralité de pièces polaires (24, 25 ; 32, 33) en un matériau ferromagnétique, juxtaposées le long d'un axe longitudinal de la culasse, chaque pièce polaire étant séparée des pièces polaires adjacentes par un aimant permanent (23 ; 31).

5. Dispositif selon la revendication 4, dans lequel lesdits aimants (23) et pièces polaires (24, 25) portés par la culasse sont en forme de couronne, tandis que ceux (31 à 33) portés par le noyau sont en forme de disque d'épaisseur semblable à celle de ladite couronne, les couronnes et les disques s'étendant perpendiculairement à l'axe longitudinal de la culasse.

## Patentansprüche

1. Verfahren zum Verlegen eines Produktes großer Länge in den Boden gleichzeitig mit dem Verlegen eines zum Umschließen des Produktes bestimmten Schutzschlauches, bei welchem der Boden gemäß einem Graben aufgebrochen wird, wobei gleichzeitig in den Graben in dem Maße, wie er entsteht, ein Schlauch (13) abgelegt wird, der das Produkt (40) mit Spiel aufnehmen kann, dadurch gekennzeichnet, daß in dem Maße, wie der Schlauch (13) in dem Graben verlegt wird, das Produkt an seinem freien Ende in die gleiche Richtung wie die der Verlegung des Schlauches und in dessen Inneren mittels einer magnetischen Mitnahmevorrichtung (14) gezogen wird, die ein rohrförmiges Joch (16), das mit Spiel von dem Schlauch (13) durchquert werden kann, und einen zylindrischen Kern (15) aufweist, der mit Spiel in dem Schlauch aufgenommen werden kann, wobei das Joch und der Kern magnetische Einrichtungen (23 bis 27; 31 bis 33) aufweisen, die so ausgelegt sind, daß sie radial zwischen sich und durch den Schlauch (13) hindurch ein Magnetfeld erzeugen, das den Kern (15) bezüglich des Jochs (16) axial fixiert, wobei das Ende des Produktes am Kern befestigt ist und der Zug auf das Produkt dadurch erfolgt, daß das Joch (16) parallel zum Graben im Maße seiner Entstehung verschoben wird.

2. Vorrichtung zum Verlegen eines in einem Schlauch (13) angeordneten Produktes großer Länge (40), welche einen Tiefenlockerer (1), an dem Aufbrecheinrichtungen (5) befestigt sind, die so ausgebildet sind, daß sie den Boden gemäß einem Graben in einer Tiefe aufbrechen, die der Verlegungstiefe des Produktes entspricht, und eine Schlauchhaspel (11) aufweist, die eine Schlauchlänge liefern kann, die im wesentlichen derjenigen des zu verlegenden Produktes entspricht, dadurch gekennzeichnet, daß auf dem Tiefenlockerer eine magnetische Mitnahmevorrichtung zum Ziehen des Produktes (40) im Inneren des Schlauches (13) angebracht ist, die zwischen der Schlauchhaspel (11) und den Aufbrechvorrichtungen (5) angeordnet ist und ein rohrförmiges Joch (16) aufweist, das mit Spiel von einem Schlauch (13) und einem zylindrischen Kern (15), der mit Spiel in dem Schlauch aufgenommen werden kann, durchquert werden kann, wobei das Joch und der Kern magnetische Einrichtungen (23 bis 27; 31 bis 33) aufweisen, die so ausgebildet sind, daß sie radial zwischen sich und durch den Schlauch hindurch ein Magnetfeld erzeugen, das den Kern (15) bezüglich des Jochs (16) axial fixiert, wobei das Joch an dem Tiefenlockerer befestigt ist und der Kern Einrichtungen aufweist, um das Befestigen eines Endes des Produktes an ihm zu erlauben.

3. Verlegungsvorrichtung nach Anspruch 2, bei welcher das Produkt (40) um eine Produkthaspel (41) aufgerollt ist, die mit Trageeinrichtungen (42) ausgestattet ist, auf denen diese oberhalb des Grabens auf dem Boden ruht.

4. Verlegungsvorrichtung nach Anspruch 2, dadurch gekennzeichnet, daß die magnetischen Einrichtungen auf dem Joch (16) und auf dem Kern (15) eine Vielzahl von Polschuhen (24, 25; 32, 33) aus einem ferromagnetischen Material aufweisen, die längs einer Längsachse des Joches nebeneinanderliegen, wobei jeder Polschuh von den angrenzenden Polschuhen durch einen Permanentmagneten (23; 31) getrennt ist.

5. Vorrichtung nach Anspruch 4, bei welcher die von dem Joch getragenen Magneten (23) und Polschuhe (24, 25) die Form eines Kranzes haben, während diejenigen (31 bis 33), die von dem Kern getragen werden, die Form einer Scheibe mit einer Dicke haben, die derjenigen des Kranzes gleicht, wobei die Kränze und Scheiben sich senkrecht zur Längsachse des Jochs erstrecken.

## Claims

1. Method for laying down in the ground a product of great length together with the laying down of a protective tube designed to surround said product, including the step of breaking up the ground to form a furrow while laying down into said furrow, as its building proceeds, a certain length of a tube (13) suitable for housing said product (40') with a certain amount of play, characterized in that, as the laying down of said tube (13) proceeds, the product is pulled by its free end inside the tube, in the same direction as the laying down of the tube, by means of a magnetic pulling device (14) comprising a tubular yoke (16) through which the tube (13) can pass with a certain amount of play, and a cylindrical core (15) capable of being housed with a certain amount of play in the tube, the yoke and the core having magnetic means (23-27;31-33) arranged to produce a radial magnetic field between them and through said tube (13), and capable of preventing the core (15) from moving axially with respect to the yoke (16), said end of the product being attached to said core, a traction being exerted on the product when said yoke (16) is moved parallel to the furrow as building of the latter proceeds.

2. Device for laying down in the ground a product of great length (40) placed in a tube (13), including a subsoiler (1) on which are mounted breaking means (5) arranged to break up the ground to form a furrow to a depth corresponding to the depth at which the product is laid, and a tube reel (11) capable of supplying a length of tube substantially equal to that of the product to be laid, characterized in that on said subsoiler is mounted a magnetic pulling device for pulling the product (40) inside the tube (13), said magnetic pulling device being placed between the tube reel (11) and the breaking means (5), and comprising a tubular yoke (16) through which the tube (13) can pass with a certain amount of play and a cylindrical core (15) suitable for being housed with a certain amount of play in the tube, the yoke and the core having magnetic means (23-27;31-33) arranged to produce a radial magnetic field between them and through said tube, and capable of preventing the core (15) from moving axially with respect to the yoke (16), the yoke being fixed to the subsoiler and the core including means suitable for attaching to it one end of the product.

3. Laying device according to claim 2, wherein the product (40) is wound around a product reel (41) provided with support means (42), whereby said product reel rests on the ground upstream of said furrow.

4. Laying device according to claim 2, characterized in that said magnetic means comprise, on the yoke (16) and on the core (15), a plurality of polar elements (24,25;32,33) made of a ferromagnetic material and juxtaposed along a longitudinal axis of the yoke, each polar element being separated from the adjacent polar elements by a permanent magnet (23;31).

5. Device according to claim 4, wherein said magnets (23) and polar elements (24,25) borne by the yoke are shaped as crowns, whereas those (31-33) borne by the core are shaped as discs the thickness of which is comparable to that of said crowns, the crowns and the discs extending perpendicularly to the longitudinal axis of the yoke.
